# FASCICULE DE BREVET EUROPEEN

(11) **EP 2 440 773 B1**
(45) Date de publication et mention de la délivrance du brevet: **01.03.2017**
(21) Numéro de dépôt: 10737983.6
(22) Date de dépôt: 10.06.2010
(51) Int. Cl.: F02N 11/08

(54) **PROCÉDÉ D'ARRÊT ET DE REDÉMARRAGE AUTOMATIQUE D'UN MOTEUR THERMIQUE D'UN VÉHICULE ÉQUIPÉ D'UNE TRANSMISSION MANUELLE ET VÉHICULE COMPORTANT UNE BOÎTE DE VITESSE, UNE PÉDALE D'EMBRAYAGE, UN DISPOSITIF D'ARRÊT ET DE REDÉMARRAGE AUTOMATIQUE METTANT EN OEUVRE CE PROCÉDÉ**
VERFAHREN ZUM AUTOMATISCHEN ANLASSEN UND ABSCHALTEN EINER BRENNKRAFTMASCHINE EINES FAHRZEUGS MIT EINEM MANUELLEN GETRIEBE UND FAHRZEUG MIT EINEM GETRIEBE, EINER KUPPLUNG UND EINER ANLASS-/ABSCHALTVORRICHTUNG ZUR UMSETZUNG DES VERFAHRENS
METHOD OF AUTOMATICALLY STARTING AND STOPPING AN IC ENGINE OF A VEHICLE EQUIPPED WITH A MANUAL TRANSMISSION AND VEHICLE COMPRISING A TRANSMISSION, A CLUTCH PEDAL AND AN AUTOMATIC START/STOP DEVICE CARRYING OUT THE METHOD

(30) Priorité: 12.06.2009 FR 0953949
(43) Date de publication de la demande: 18.04.2012
(73) Titulaire: Renault S.A.S., 78288 Guyancourt Cedex (FR)
(72) Inventeur: CHASSAGNOL, Cédric, F-92110 Clichy (FR); LACASSAGNE, Laurent, F-78460 Chevreuse (FR)
(86) Numéro de dépôt international: PCT/FR2010/051153
(87) Numéro de publication internationale: WO 2010/142916

(56) Documents cités:
- WO-A-2005/110793
- DE-A1- 3 228 600
- DE-A1-102004 023 503
- DE-A1-102004 023 615
- DE-C1- 4 412 438
- FR-A- 2 528 117
- US-A- 4 497 291
- US-A- 4 500 794
- US-A- 4 555 006

## Description

L'invention concerne le domaine des moteurs thermiques de véhicules équipés de la fonction d'arrêt et redémarrage automatique desdits moteurs thermiques.

L'invention concerne plus particulièrement un procédé de commande de l'arrêt et du redémarrage d'un moteur thermique équipant un véhicule à transmission manuelle.

La fonction d'arrêt et redémarrage également appelée Stop&Start ou encore appelée Stop&Go, consiste à couper automatiquement le moteur thermique lorsque la vitesse du véhicule est nulle ou faible, par exemple en ville lors de l'arrêt à un feu rouge ou dans les embouteillages. Cette fonction contribue à réduire la consommation globale du véhicule et la pollution qu'il engendre, que ce soit la pollution de l'air ou la pollution sonore.

Parmi les conditions déclenchant l'arrêt ou le redémarrage du moteur thermique, l'état de la pédale d'embrayage est souvent utilisé. Pour les véhicules équipés d'une boîte de vitesse manuelle et qui disposent de cette fonction, les dispositifs d'arrêt et redémarrage utilisent généralement un contacteur pour détecter la position de la pédale d'embrayage du véhicule pour déclencher le redémarrage du véhicule.

L'utilisation d'un contacteur unique sur la position de repos de la pédale d'embrayage, dite position haute, rend difficile la détermination de ce dernier. En effet si le contacteur est positionné au début de la course de la pédale, en position haute, la détection de l'appui de la pédale d'embrayage est rapide. Toutefois, le relâchement de la pédale d'embrayage n'est pas toujours détecté. En effet, la pédale n'est alors pas considérée comme étant relâchée si le conducteur garde le pied posé sur celle-ci.

Il peut être aussi envisagé de positionner ce contacteur plus bas dans la course de la pédale d'embrayage de sorte à ne pas actionner ce dernier dans le cas où le conducteur laisse son pied posé sur la pédale. Un tel positionnement du contacteur serait alors préjudiciable au temps de détection de l'appui pédale et donc au temps de redémarrage.

Il est également connu, notamment par les documents FR 2 528 117, DE 44.12.438 et US 4,500,794, des dispositifs d'arrêt et de redémarrage automatiques du moteur comprenant deux capteurs de position de la pédale d'embrayage, afin de détecter l'état de débrayage ou d'embrayage du moteur.

Un but de la présente invention consiste à détecter le relâchement et l'appui de la pédale d'embrayage de manière à déclencher les redémarrages d'un tel véhicule le plus tôt possible que le conducteur laisse ou non son pied posé sur la pédale d'embrayage.

Dans ce but, l'invention propose un procédé de commande de l'arrêt et du redémarrage d'un moteur thermique d'un véhicule comportant une boite de vitesse et une pédale d'embrayage caractérisé en ce qu'on détecte l'appui ou le relâchement de la pédale d'embrayage en fonction de la position de la pédale d'embrayage relativement au sens d'appui de la pédale, par rapport à moins deux positions seuil d'appui prédéterminés.

Selon d'autres caractéristiques de l'invention:
- une première position seuil peut être atteinte lorsque la course de la pédale est comprise entre 0 et 15% du déplacement total de la pédale d'embrayage ;
- une deuxième position seuil peut être atteinte lorsque la course de la pédale est comprise entre 15 et 40% du déplacement total de la pédale d'embrayage ;
- une troisième position seuil au-delà de la deuxième position seuil peut être atteinte lorsque la boite de vitesse est au point mort ;
- un début d'appui de la pédale d'embrayage peut être détecté lorsque la course de la pédale d'embrayage passe d'une course inférieure à celle de la première position seuil à une course supérieure à celle de la première position seuil, ou lorsque la course de la pédale d'embrayage passe d'une course inférieure à celle de la deuxième position seuil à une course supérieure à celle de la deuxième position seuil ;
- un début d'appui de la pédale d'embrayage peut être détecté lorsque la pédale d'embrayage, ayant une course inférieure à la course de la première position seuil pendant une durée minimum déterminée, passe à une course supérieure à celle de la première position seuil, ou lorsque la course de la pédale d'embrayage passe d'une course inférieure à celle de la deuxième position seuil, à une course supérieure à celle de la deuxième position seuil ;
- la durée minimum déterminée peut être inférieure à 5 secondes ;
- le moteur peut être redémarré lorsque la boite de vitesse du véhicule est au point mort, et lorsqu'on détecte un début d'appui de la pédale d'embrayage ;
- le moteur peut être redémarré lorsqu'une vitesse est engagée, et lorsque la position de la pédale d'embrayage est située à une course supérieure à la course de la troisième position seuil ;
- le relâchement de la pédale d'embrayage peut être détecté lorsque la position de la pédale d'embrayage est située à une course inférieure à celle de la deuxième position seuil.

Ce procédé permet une plus grande rapidité de redémarrage en détectant la volonté du conducteur le plus tôt possible.

La position relâchée de la pédale d'embrayage est avantageusement détectée même si le conducteur laisse le pied posé dessus. La pédale d'embrayage est considérée relâchée même si celle-ci n'est pas totalement revenue en position de repos.

De même, l'appui sur la pédale d'embrayage est une condition pour déclencher le redémarrage du moteur thermique. Pour redémarrer le plus rapidement possible, on détecte l'appui de la pédale le plus tôt possible. La pédale d'embrayage est considérée comme étant appuyée si celle-ci a parcouru une course prédéfinie à partir de la position considérée comme relâchée lors du dernier arrêt.

L'invention propose également un véhicule comportant un tel dispositif ou utilisant un tel procédé.

D'autres caractéristiques et avantages de l'invention apparaîtront clairement à la lecture de la description détaillée d'un mode de réalisation pris à titre d'exemple non limitatif, et illustré par les dessins annexés, sur lesquels :
- la figure 1 représente trois seuils de détection de l'appui et du relâchement de la pédale d'embrayage,
- la figure 2 représente un logigramme du procédé selon l'invention.

L'action du conducteur sur une pédale d'embrayage est un facteur déterminant dans l'action d'arrêt et de redémarrage d'un moteur thermique d'un véhicule à boîte de vitesse manuelle.

La course de la pédale correspond au déplacement effectué par la pédale en fonction de l'appui effectué par le conducteur du véhicule sur la pédale. Le déplacement de la pédale peut ainsi varier entre une position initiale ou position de repos pour laquelle aucun déplacement n'est effectué, et une position finale dans laquelle la pédale est totalement enfoncée.

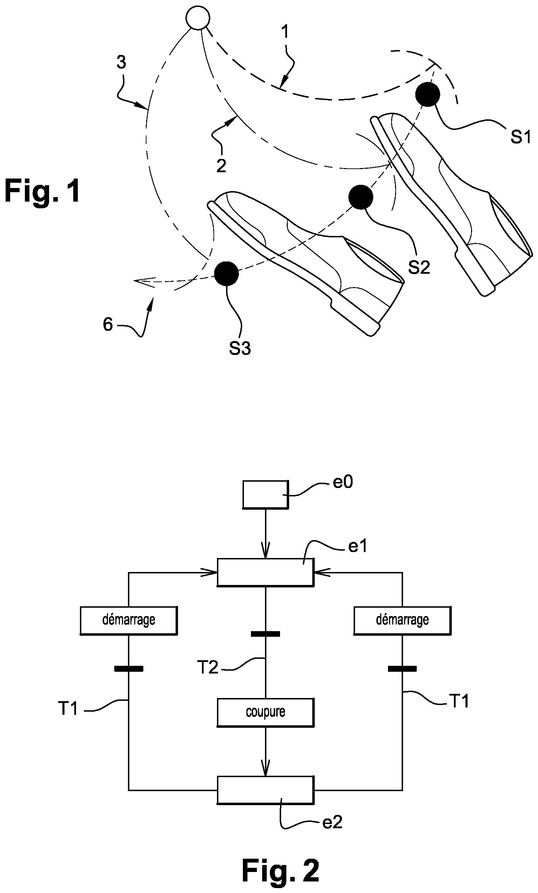

A la figure 1, on a illustré par un schéma la détection de l'appui et du relâchement d'une pédale d'embrayage. Trois positions seuil S1,S2,S3 ont été représentées.

Une première position seuil S1 est située en début de course de la pédale d'embrayage. La course de cette première position seuil S1 est comprise entre 0 et 15% du déplacement total pouvant être effectué par la pédale, depuis la position de repos jusqu'à la position finale dans laquelle la pédale est totalement enfoncée.

Tel qu'illustré, la position de pédale 1 a une course inférieure relativement au sens d'appui 6 de la pédale par le conducteur, à la course de la première position seuil S1, et illustre le cas où la pédale d'embrayage est totalement relâchée.

Une deuxième position seuil S2 est située à une course supérieure à celle du premier seuil S1 relativement au sens d'appui 6 de la pédale par le conducteur. La course de la deuxième position seuil S2 est comprise entre 15% et 40% du déplacement total pouvant être effectué par la pédale d'embrayage. Cette deuxième position seuil S2 permet de détecter le cas où un conducteur relâche la pédale d'embrayage tout en maintenant le pied posé dessus. Cela est par exemple représenté par la position 2 de la pédale d'embrayage. Dans ce cas, la position 2 est située à une course inférieure relativement au sens d'appui 6 de la pédale par le conducteur, à celle de la deuxième position seuil S2.

Une troisième position seuil S3 est située en fin de course de la pédale d'embrayage. Lorsque cette troisième position seuil S3 est atteinte, la transmission du moteur thermique est désaccouplée : la transmission du couple du moteur thermique aux roues motrices du véhicule n'est plus réalisée. Cela est par exemple illustré à la figure 1 par la position 3 de la pédale d'embrayage. Dans ce cas, à la position 3, la pédale d'embrayage est totalement enfoncée et la course de la pédale est supérieure à la course de la troisième position seuil S3.

La connaissance de la course de la pédale d'embrayage par rapport à ces trois positions seuil S1, S2, S3 permet de détecter l'appui ou le relâchement de la pédale d'embrayage.

Ainsi, à la figure 2, on a représenté un logigramme du procédé d'arrêt et de redémarrage automatique selon l'invention, d'un moteur thermique (non représenté) d'un véhicule comportant une boîte de vitesse manuelle (non représenté) et une pédale d'embrayage.

L'activation de la coupure du moteur est généralement réalisée lorsque plusieurs conditions sont réunies. La vitesse du véhicule doit être inférieure à une vitesse seuil prédéterminée, le levier de vitesse doit être positionné au point mort, et la pédale d'embrayage doit être relâchée. Il sera compris que cette liste n'est pas exhaustive, et qu'il peut exister d'autres conditions à réunir telle que la détection de l'appui sur la pédale de frein, et d'autres encore.

L'activation du redémarrage du moteur est également réalisée lorsqu'une condition est vérifiée. Cette condition peut être la détection du point mort et la détection d'un début d'appui de la pédale d'embrayage. Cette condition peut être la détection de l'engagement d'une vitesse et la détection de l'appui complet sur la pédale d'embrayage. Il sera également compris que les exemples donnés ci-dessus sur la condition d'activation sont donnés à titre d'exemple non limitatifs.

Le procédé d'arrêt et de redémarrage automatique d'un moteur thermique d'un véhicule, selon l'invention, comporte une étape de détection d'appui ou du relâchement de la pédale d'embrayage. A l'aide de ce procédé, on détecte l'appui ou le relâchement de la pédale d'embrayage en fonction de la position de la pédale d'embrayage par rapport au trois positions seuil S1,S2 et S3 prédéterminées.

Tel qu'illustré, le logigramme comporte deux états : un état moteur_tournant e1, un état moteur_arrêté e2. Il comporte également deux transitions : une transition T1 permettant d'activer l'arrêt du moteur et une transition T2 permettant d'activer le redémarrage du moteur.

Le procédé d'arrêt et de redémarrage automatique est activé après une étape d'initialisation e0 correspondant à la première mise en marche du moteur, qui est, par exemple, effectuée par le conducteur du véhicule lorsqu'il active la clé de contact du véhicule.

Après cette étape d'initialisation e0, le moteur se trouve dans l'état moteur_tournant e1. Le procédé d'arrêt et de redémarrage automatique est alors activé.

Une transition T1 correspond au passage de l'état moteur_tournant e1 à l'état moteur_arrêté e2. Cette transition T1 correspond à l'activation de la coupure du moteur thermique.

Tel que précisé précédemment, l'activation de la coupure du moteur est réalisée si plusieurs conditions sont réunies et si la pédale d'embrayage est relâchée.

On détecte le relâchement de la pédale d'embrayage lorsque la course de la pédale d'embrayage est inférieure à la course de la deuxième position seuil S2.

Lorsque la coupure du moteur est effective, le moteur est alors dans l'état moteur_arrêté e2.

Une transition T2 correspond au passage de l'état moteur_arrêté e2 à l'état moteur_tournant e1. Cette transition T2 correspond à l'activation du redémarrage du moteur thermique.

Tel que précisé précédemment, l'activation du redémarrage automatique du moteur est réalisée notamment si la boîte de vitesse est au point mort, c'est-à-dire si aucune vitesse n'est engagée, et si la pédale d'embrayage est actionnée.

Dans ce cas, on détecte un début d'appui de la pédale d'embrayage lorsque la course de la pédale d'embrayage passe d'une course inférieure à celle de la première position seuil S1, à une course supérieure à celle de la première position seuil S1 relativement au sens d'appui de la pédale. Ou bien, on détecte un début d'appui de la pédale lorsque la course de la pédale d'embrayage passe d'une course inférieure à la deuxième position seuil S2 à une course supérieure à cette deuxième position seuil S2.

De même, le redémarrage du moteur automatique du moteur thermique peut être réalisé si une vitesse est engagée, et si la pédale d'embrayage est totalement enfoncée. Ainsi, lorsqu'une vitesse est engagée, on redémarre le moteur lorsque la course de la pédale d'embrayage est supérieure, relativement au sens d'appui 6 de la pédale, à la course de la troisième position seuil S3.

Dans un deuxième mode de réalisation, un délai a été introduit pour détecter la volonté du conducteur de relâcher la pédale d'embrayage. En effet, si le conducteur maintient son pied posé sur la pédale d'embrayage, celle-ci ayant une course proche de la course de la première position seuil S1, il peut se produire un redémarrage involontaire. En effet, si l'effort sur la pédale d'embrayage est brièvement relâché, la course de la première position seuil S1 peut être atteinte, ce qui provoque le redémarrage du moteur thermique.

Ainsi dans ce mode de réalisation, on détecte un début d'appui de la pédale d'embrayage lorsque la pédale d'embrayage, ayant une course inférieure à la course de la première position seuil S1 pendant une durée minimum déterminée, 5 secondes par exemple, passe à une course supérieure à celle de la première position seuil S1.

Pour mettre en oeuvre ce procédé décrit ci-dessus, la mesure de la course peut être effectuée à partir d'un moyen de mesure tel qu'un capteur analogique qui délivre une information continue variant en fonction de la position mesurée de la pédale d'embrayage ou du mécanisme d'embrayage.

La mesure de la course de la pédale peut également être réalisée à partir de plusieurs capteurs délivrant une information binaire, disposés sur la course de la pédale ou tout autre endroit de la chaîne mécanique entre la pédale et l'embrayage.

La mesure de la course de la pédale d'embrayage peut aussi être effectuée à l'aide d'un capteur apte à mesurer la pression d'assistance hydraulique de l'actuateur d'embrayage.

Il sera compris que ces moyens de détermination de la position de la pédale d'embrayage sont donnés à titre d'exemples non limitatifs et que tout autre moyen apte à déterminer la position de la pédale d'embrayage peut être utilisé.

Un tel procédé permet de détecter l'appui et le relâchement de la pédale d'embrayage d'un véhicule équipé d'une boîte de vitesse manuelle de manière à déclencher les arrêts et redémarrages du moteur thermique.

Ce procédé permet avantageusement d'effectuer l'arrêt du moteur thermique même si le conducteur maintient le pied sur la pédale d'embrayage, et permet de détecter rapidement un appui sur la pédale grâce notamment à la première position seuil S1.

## Revendications

1. Procédé de commande de l'arrêt et du redémarrage d'un moteur thermique d'un véhicule comportant une boîte de vitesse et une pédale d'embrayage pour laquelle on détecte l'appui ou le relâchement de ladite pédale d'embrayage en fonction de la position de la pédale d'embrayage relativement au sens d'appui de la pédale, par rapport à au moins deux positions seuil d'appui prédéterminées, ledit procédé comprenant les étapes suivantes :
- lorsque la boîte de vitesse du véhicule est au point mort, on redémarre le moteur lorsque l'on détecte un début d'appui de la pédale d'embrayage, ledit début d'appui de la pédale d'embrayage étant détecté lorsque la course de la pédale d'embrayage passe d'une course inférieure à celle d'une première position seuil (S1), étant située entre 0 et 15% du déplacement total de la pédale d'embrayage, à une course supérieure à celle de la première position seuil (S1),
- lors qu'une vitesse est engagée, on redémarre le moteur lorsque la position de la pédale d'embrayage est située à une course supérieure à la course d'une troisième position seuil (S3), située en fin de course de la pédale d'embrayage,
ledit procédé étant **caractérisé en ce qu'**un début d'appui de la pédale d'embrayage est également détecté lorsque la course de la pédale d'embrayage passe d'une course inférieure à celle d'une deuxième position seuil (S2), étant située entre 15 et 40% du déplacement total de la pédale d'embrayage, à une course supérieure à celle de la deuxième position seuil (S2).

2. Procédé de commande de l'arrêt et du redémarrage d'un moteur thermique selon la revendication précédente, **caractérisé en ce qu'**on détecte un début d'appui de la pédale d'embrayage lorsque la pédale d'embrayage, ayant une course inférieure à la course de la première position seuil (S1) pendant une durée T minimum déterminée, passe à une course supérieure à celle de la première position seuil (S1), ou lorsque la course de la pédale d'embrayage passe d'une course inférieure à celle de la deuxième position seuil (S2), à une course supérieure à celle de la deuxième position seuil (S2).

3. Procédé de commande de l'arrêt et du redémarrage d'un moteur thermique selon la revendication précédente, **caractérisé en ce que** le durée T minimum déterminée est inférieure à 5 secondes

4. Procédé de commande de l'arrêt et du redémarrage d'un moteur thermique selon la revendication 1 **caractérisé en ce qu'**on détecte le relâchement de la pédale d'embrayage lorsque la position de la pédale d'embrayage est située à une course inférieure à celle de la deuxième position seuil (S2).

5. Véhicule comportant une boîte de vitesse, une pédale d'embrayage, un dispositif d'arrêt et de redémarrage automatique mettant en oeuvre le procédé selon l'une des revendications précédentes.

## Patentansprüche

1. Verfahren zur Steuerung des Stoppens und Startens eines Verbrennungsmotors eines Fahrzeugs, das ein Schaltgetriebe und ein Kupplungspedal aufweist, wobei das Niederdrücken oder Loslassen des Kupplungspedals abhängig von der Stellung des Kupplungspedals bezüglich der Niederdrückrichtung des Pedals in Bezug auf mindestens zwei vorbestimmte Niederdrückschwellenstellungen erfasst wird, wobei das Verfahren die folgenden Schritte enthält:
- wenn das Schaltgetriebe des Fahrzeugs im Leerlauf ist, wird der Motor neu gestartet, wenn ein Niederdrückbeginn des Kupplungspedals erfasst wird, wobei der Niederdrückbeginn des Kupplungspedals erfasst wird, wenn der Weg des Kupplungspedals von einem Weg geringer als derjenige einer ersten Schwellenstellung (S1), die sich zwischen 0 und 15% der Gesamtverschiebung des Kupplungspedals befindet, zu einem Weg größer als derjenige der ersten Schwellenstellung (S1) übergeht,
- wenn ein Gang eingelegt ist, der Motor neu gestartet wird, wenn die Stellung des Kupplungspedals sich auf einem Weg größer als der Weg einer dritten Schwellenstellung (S3) befindet, die sich am Wegende des Kupplungspedals befindet,
wobei das Verfahren **dadurch gekennzeichnet ist, dass** ein Niederdrückbeginn des Kupplungspedals ebenfalls erfasst wird, wenn der Weg des Kupplungspedals von einem Weg geringer als derjenige einer zweiten Schwellenstellung (S2),
die sich zwischen 15 und 40% der Gesamtverschiebung des Kupplungspedals befindet, zu einem Weg übergeht, der größer ist als derjenige der zweiten Schwellenstellung (S2).

2. Steuerverfahren des Stoppens und Startens eines Verbrennungsmotors nach dem vorhergehenden Anspruch, **dadurch gekennzeichnet, dass** ein Niederdrückbeginn des Kupplungspedals erfasst wird, wenn das Kupplungspedal, das während einer bestimmten Mindestdauer T einen Weg geringer als der Weg der ersten Schwellenstellung (S1) hat, zu einem Weg übergeht, der größer ist als derjenige der ersten Schwellenstellung (S1), oder wenn der Weg des Kupplungspedals von einem Weg geringer als derjenige der zweiten Schwellenstellung (S2) zu einem Weg übergeht, der größer ist als derjenige der zweiten Schwellenstellung (S2).

3. Steuerverfahren des Stoppens und Startens eines Verbrennungsmotors nach dem vorhergehenden Anspruch, **dadurch gekennzeichnet, dass** die bestimmte Mindestdauer T kürzer als 5 Sekunden ist.

4. Steuerverfahren des Stoppens und Startens eines Verbrennungsmotors nach Anspruch 1, **dadurch gekennzeichnet, dass** das Loslassen des Kupplungspedals erfasst wird, wenn die Stellung des Kupplungspedals sich auf einem Weg geringer als derjenige der zweiten Schwellenstellung (S2) befindet.

5. Fahrzeug, das ein Schaltgetriebe, ein Kupplungspedal, eine automatische Stopp- und Startvorrichtung aufweist, die das Verfahren nach einem der vorhergehenden Ansprüche anwendet.

## Claims

1. Method for controlling the stopping and restarting of a combustion engine of a vehicle comprising a gearbox and a clutch pedal for which pressure on or release of the said clutch pedal is detected according to the position of the clutch pedal relative to the direction of pressure on the pedal with respect to at least two predetermined pressure threshold positions, the said method comprising the following steps:
- when the vehicle gearbox is in neutral, the engine is restarted when the start of pressure on the clutch pedal is detected, the said start of pressure on the clutch pedal being detected when the clutch pedal travel crosses the threshold from a travel below that of a first threshold position (S1), being situated between 0 and 15% of the total range of movement of the clutch pedal, to a travel greater than that of the first threshold position (S1),
- when a gear is engaged, the engine is restarted when the position of the clutch pedal is situated at a travel greater than the travel of a third threshold position (S3) situated at the end of the clutch pedal travel,
the said method being **characterized in that** a start of pressure on the clutch pedal is also detected when the clutch pedal travel crosses the threshold from a travel below that of a second threshold position (S2) being situated between 15 and 40% of the total range of movement of the clutch pedal, to a travel greater than that of the second threshold position (S2).

2. Method for controlling the stopping and restarting
of a combustion engine according to the preceding claim, **characterized in that** a start of pressure on the clutch pedal is detected when the clutch pedal, having a travel less than the travel of the first threshold position (S1) for a determined minimum length of time T, crosses a threshold to a travel greater than that of the first threshold position (S1), or when the clutch pedal travel crosses the threshold from a travel below that of the second threshold position (S2) to a travel greater than that of the second threshold position (S2).

3. Method for controlling the stopping and restarting
of a combustion engine according to the preceding claim, **characterized in that** the determined minimum length of time T is less than 5 seconds.

4. Method for controlling the stopping and restarting of a combustion engine according to Claim 1, **characterized in that** release of the clutch pedal is detected when the position of the clutch pedal is situated at a travel less than that of the second threshold position (S2).

5. Vehicle comprising a gearbox, a clutch pedal, an automatic stop and restart device implementing the method according to one of the preceding claims.
